# EUROPÄISCHE PATENTSCHRIFT

(11) **EP 3 718 387 B1**
(45) Veröffentlichungstag und Bekanntmachung des Hinweises auf die Patenterteilung: **07.06.2023**
(21) Anmeldenummer: 20151406.4
(22) Anmeldetag: 13.01.2020
(51) Int. Cl.: A01B 69/00, A01B 69/04

(54) **LANDWIRTSCHAFTLICHE ARBEITSMASCHINE**
AGRICULTURAL WORKING MACHINE
MACHINE DE TRAVAIL AGRICOLE

(30) Priorität: 02.04.2019 DE 102019108505
(43) Veröffentlichungstag der Anmeldung: 07.10.2020
(73) Patentinhaber: CLAAS E-Systems GmbH, 49201 Dissen (DE)
(72) Erfinder: Hoff, Carsten, 33378 Rheda-Wiedenbrück (DE)
(74) Vertreter: CLAAS Gruppe

(56) Entgegenhaltungen:
- EP-A1- 2 316 259
- EP-B1- 2 316 259
- EP-B9- 2 158 799
- DE-A1-102015 116 586
- DE-A1-102016 118 237
- US-A1- 2014 324 272
- US-A1- 2017 135 277

## Beschreibung

Die vorliegende Erfindung betrifft eine landwirtschaftliche Arbeitsmaschine gemäß dem Oberbegriff des Anspruches 1. Insbesondere betrifft die vorliegende Erfindung eine als selbstfahrende Erntemaschine oder Traktor ausgeführte landwirtschaftliche Arbeitsmaschine.

Die Erfassung von Hindernissen, welche sich in einem Feldbestand befinden, ist für den Betreiber einer landwirtschaftlichen Arbeitsmaschine von großer Bedeutung, um Verletzungen von Lebewesen, d.h. Personen sowie Tieren, zu vermeiden. Ebenso kann durch die Erfassung von Hindernissen eine Beschädigung der landwirtschaftlichen Arbeitsmaschine sowie eines daran frontseitig angeordneten Anbaugerätes verhindert werden, wenn es sich bei dem Hindernis beispielsweise um einen Stein oder dergleichen handelt.

Hinsichtlich der Visualisierung von erkannten Hindernissen werden im Stand der Technik verschiedene Ansätze verfolgt. So offenbart der Stand der Technik beispielsweise das Projizieren eines erkannten Hindernisses in Form eines Warnhinweises in einer zum Bediener eines Fahrzeugs beabstandeten Zielposition auf einer vor dem Fahrzeug liegenden Fahrstrecke. Aus der EP 2 158 799 B9 ist es bekannt, eine Arbeitsbeleuchtung einer landwirtschaftlichen Arbeitsmaschine mittels einer Regel- und Steuereinrichtung in der Weise anzusteuern, dass während des Umfahrens eines erkannten Hindernisses dieses für die Dauer der Umfahrung angeleuchtet wird. Die DE 10 2016 118237 A1 offenbart eine landwirtschaftliche Arbeitsmaschine mit einem Bildverarbeitungssystem und einer Regel- und Steuereinheit zum Erkennen von Hindernissen.

Ausgehend vom vorstehend genannten Stand der Technik liegt der Erfindung die Aufgabe zugrunde, eine landwirtschaftliche Arbeitsmaschine der eingangs genannten Art weiterzubilden, so dass ein Bediener der landwirtschaftlichen Arbeitsmaschine frühzeitig und eindeutig auf im Vorfeld vorhandene Hindernisse und deren jeweilige Lage aufmerksam gemacht wird.

Diese Aufgabe wird erfindungsgemäß durch die Merkmale des Anspruches 1 gelöst. Vorteilhafte Weiterbildungen der Erfindung sind Gegenstand der Unteransprüche.

Gemäß dem Anspruch 1 wird eine landwirtschaftliche Arbeitsmaschine vorgeschlagen, welche zumindest eine optische Sensoreinrichtung, ein Bildverarbeitungssystem sowie eine Regel- und Steuervorrichtung, die zur Ansteuerung einer mehrere Lichtquellen umfassenden Arbeitsbeleuchtung eingerichtet ist, umfasst. Die zumindest eine optische Sensoreinrichtung erfasst eine Umgebung im Vorfeld der Arbeitsmaschine vorausschauend, das Bildverarbeitungssystem detektiert das Auftreten eines oder mehrerer Hindernisse in zumindest einer in der Umgebung im Vorfeld der Arbeitsmaschine liegenden Hindernisregion mittels Bildanalyse und die Regel- und Steuervorrichtung erzeugt Steuersignale, die eine Ausrichtung zumindest einer der Arbeitsmaschine zugeordneten Lichtquelle, die zumindest einen aus sichtbarem Licht bestehenden, gebündelten Lichtstrahl erzeugt, ansteuert, um den zumindest einen Lichtstrahl auf die identifizierte Hindernisregion auszurichten. Durch die gezielte Ausrichtung des von der zumindest einen der Arbeitsmaschine zugeordneten Lichtquelle emittierten Lichtstrahls wird die Aufmerksamkeit des Bedieners unmittelbar und eindeutig auf die identifizierte Hindernisregion gerichtet. Der Wesentliche Vorteil gegenüber dem Stand der Technik besteht darin, dass unabhängig davon, ob das Hindernis für den Bediener der Arbeitsmaschine unmittelbar sichtbar ist oder nicht, das gezielte Anstrahlen der Hindernisregion die Aufmerksamkeit des Bedieners erregt und gezielt auf das Hindernis lenkt. So kann beispielsweise bei einem durch einen Pflanzenbestand verdeckten Stein oder einem sich kauernden Rehkitz der Bediener das Hindernis als solches nicht oder nicht rechtzeitig wahrnehmen. Hingegen ist die Position der Hindernisregion im Vorfeld der Arbeitsmaschine durch die Ausrichtung des zumindest einen Lichtstrahls auf die Hindernisregion eindeutig identifiziert und für den Bediener unmittelbar und eindeutig zu erkennen. Besonders vorteilhaft ist es, dass es bei Feldarbeiten im Dunkeln oder bei ungünstigen Lichtverhältnissen für den Bediener der landwirtschaftlichen Arbeitsmaschine einfacher ist, den Überblick über das Umfeld, d.h. den aus einer Fahrerkabine heraus durch den Bediener einsehbaren Bereich um die Arbeitsmaschine herum, zu behalten. Für eine variable Ausrichtung des zumindest einen Lichtstrahls bzw. der zumindest einen Lichtquelle ist diese mittels eines Aktuators um eine vertikale und eine horizontale Achse verschwenkbar. Der Aktuator ist durch die Regel- und Steuervorrichtung ansteuerbar.

Dabei kann die Regel- und Steuervorrichtung dazu eingerichtet sein, die Ausrichtung des emittierten Lichtstrahls der zumindest einen Lichtquelle bei einer Annäherung der Arbeitsmaschine an die Hindernisregion nachzuführen. Hierdurch bleibt das permanente Anstrahlen der Hindernisregion gewährleistet, bis die Arbeitsmaschine die Hindernisregion passiert hat.

Insbesondere kann das Bildverarbeitungssystem dazu eingerichtet sein, zwischen unterschiedlichen Arten von Hindernissen zu unterscheiden. Neben Hindernissen, die über einen Pflanzenbestand hinausragen, gibt es Hindernisse, die von diesem verdeckt sein können. Zudem haben Tageszeit und vorherrschende Lichtverhältnisse einen großen Einfluss auf die Identifikation von Hindernissen. Arten von Hindernissen können beispielsweise Arbeitsgeräte, Anbaugeräte, andere Arbeitsmaschinen oder Transportfahrzeuge bzw. Transportwagen sein, die aufgrund ihrer in der Regel weitgehend symmetrischen Kontur als solche identifizierbar sind. Hingegen können beispielsweise Steine, Fundamente von Strommasten, Tiere oder Personen eine andere Art von Hindernis bilden, welches identifiziert werden muss. Vorzugsweise kann das Bildverarbeitungssystem dazu eingerichtet sein, Abmessungen des Hindernisses zu bestimmen, so dass auf die Größe einer Hindernisregion geschlossen werden kann, auf die der zumindest einen Lichtstrahl ausgerichtet wird.

Bevorzugt kann das Bildverarbeitungssystem dazu eingerichtet sein, zwischen belebten und unbelebten Hindernissen zu unterscheiden. Auf diese Weise kann eine Gewichtung durch die Regel- und Steuervorrichtung erfolgen, um zu entscheiden, welche Hindernisregion vorrangig angestrahlt wird, wenn beispielsweise im Umfeld mehrere Hindernisse identifiziert wurden, die räumlich nahe beieinanderliegen.

Dabei kann die Regel- und Steuervorrichtung dazu eingerichtet sein, die zumindest eine Lichtquelle anzusteuern, um in Abhängigkeit von dem identifizierten Hindernis zumindest einen Parameter des zumindest einen emittierten Lichtstrahls zu verändern. Dabei kann abhängig davon, ob es sich um ein belebtes oder unbelebtes Hindernis handelt, der zumindest eine Parameter des zumindest einen emittierten Lichtstrahls verändert werden, um auf eine Gefahrensituation aufmerksam zu machen, in welche ein belebtes Hindernis involviert ist.

Insbesondere können als änderbare Parameter die Lichtfarbe und/oder Lichtstärke vorgesehen sein. So können in Abhängigkeit von der Art des Hindernisses und/oder ob das Hindernis belebt oder unbelebt ist, verschiedene Farben verwendet werden, mit denen die identifizierte Hindernisregion angestrahlt wird. Weiterhin denkbar ist eine Variation der Lichtstärke in Abhängigkeit von der Art des Hindernisses. Zudem kann auch ein zyklischer Farbwechsel des zumindest einen emittierten Lichtstrahls vorgesehen sein, um auf eine besondere Situation aufmerksam zu machen, die aus dem identifizierten Hindernis resultieren kann.

Alternativ oder zusätzlich kann als änderbarer Parameter die Frequenz anpassbar sein, mit der die zumindest eine Lichtquelle einen Lichtstrahl emittiert. Dabei kann die jeweilige identifizierte Hindernisregion intermittierend angestrahlt werden. Hierdurch kann die Aufmerksamkeit des Bedieners gezielt auf das identifizierte Hindernis gelenkt werden, da eine von einer dauerhaften Beleuchtung abweichende Beleuchtung erfolgt.

Bevorzugt kann die Regel- und Steuervorrichtung dazu eingerichtet sein, die zumindest eine Lichtquelle anzusteuern, um die Lichtausbreitung des von der zumindest einen Lichtquelle emittierten Lichtstrahls anzupassen. Dabei kann die, insbesondere divergente, Lichtausbreitung, welche sich im Wesentlichen als ein kegelförmiger Lichtstrahl bzw. Lichtbündel darstellt, dessen Querschnitt mit zunehmendem Abstand zu der Lichtquelle zunimmt, durch Ansteuerung der zumindest einen Lichtquelle variierbar sein. Insbesondere kann mit zunehmender Annäherung an das Hindernis bzw. die Hindernisregion eine Fokussierung des emittierten Lichtstrahls erfolgen. Dabei kann die Fokussierung des Lichtstrahls bzw. des Lichtbündels auf die durch das Bildverarbeitungssystem ermittelte Größe des Hindernisses oder der Hindernisregion beschränkt sein, sofern dies sinnvoll ist. Eine Vergrößerung der Lichtausbreitung, um ein Hindernis in Gestalt einer Arbeitsmaschine anzustrahlen, würde dem Sinn der Erfindung zuwiderlaufen, da der Effekt, der durch die gezielte Ausrichtung und/oder Fokussierung auf das Hindernis oder die Hindernisregion erreicht werden soll, verloren ginge.

Vorzugsweise kann die zumindest eine optische Sensoreinrichtung dazu eingerichtet ist, die Umgebung im Vorfeld mit Licht im nicht sichtbaren Bereich zu erfassen. Dadurch können unter anderem belebte Hindernisse, die nicht über den Feldbestand hinausragen, identifiziert werden.

Hierzu kann die zumindest eine optische Sensoreinrichtung als Laserscanner, Lidar-Sensor, Radarsensor, oder Kamera ausgeführt sein. Insbesondere kann die Kamera als Videokamera, Infrarotkamera, Monochromkamera, Farbkamera oder 3D-Kamera ausgeführt sein. Dadurch stehen kontinuierlich aktuelle Umgebungsbilder für das Bildverarbeitungssystem zu Verfügung. Insbesondere steht bei einer Farbkamera eine Information über die Intensität und eine Farbe zur Verfügung. Zudem wird im Falle von mehreren optischen Sensoreinrichtungen ein größerer Bereich der Umgebung abgedeckt. Durch Nutzung von Radarsensoren und/oder Laserscannern werden Bilddaten, die zum Beispiel durch Kamerabilder erzeugt werden, erweitert. So stehen dann z.B. Entfernungsmessungen basierend auf Signallaufzeiten und/oder Bilddaten zu abgeschatteten/verdeckten Anomalien zur Verfügung. Insbesondere können durch Laserscanner und/oder Radarsensoren auf einfache Weise Ausmaße, insbesondere eine Höhe, von Objekten ermittelt werden.

Bevorzugt kann die zumindest eine Lichtquelle an der Arbeitsmaschine und/oder an einem von der Arbeitsmaschine frontseitig aufgenommenen Anbaugerät angeordnet sein. Die Anordnung der zumindest einen Lichtquelle an der Arbeitsmaschine kann bevorzugt am Kabinendach einer Fahrerkabine erfolgen, welche im Allgemeinen den höchsten Punkt der Arbeitsmaschine bildet. Insbesondere kann eine Positionierung im äußeren Randbereich des Kabinendaches vorgesehen sein, so dass in Fahrtrichtung gesehen ein möglichst breites Umfeld in längs der Fahrtrichtung und quer hierzu durch die zumindest eine Lichtquelle angestrahlt werden kann.

Weiterhin kann die zumindest eine optische Sensoreinrichtung an der Arbeitsmaschine und/oder an einem von der Arbeitsmaschine frontseitig aufgenommenen Anbaugerät angeordnet sein.

Gemäß einer bevorzugten Weiterbildung kann die Regel- und Steuervorrichtung dazu eingerichtet sein, die Ausrichtung von zumindest zwei Lichtstrahlen anzusteuern, um diese auf eine identifizierte Hindernisregion zu fokussieren. Somit können zwei Lichtstrahlen auf eine identifizierte Hindernisregion ausgerichtet sein, um eine verbesserte Ausleuchtung zu erreichen. Darüber hinaus kann diese Fokussierung der Lichtstrahlen von zumindest zwei Lichtquellen auch dazu genutzt werden, um auf ein identifiziertes belebtes Hindernis besonders hinzuweisen.

Insbesondere kann die landwirtschaftliche Arbeitsmaschine als eine selbstfahrende Erntemaschine oder als ein Traktor ausgeführt sein. Dabei kann es sich bei der selbstfahrenden Erntemaschine um einen Mähdrescher oder einen Feldhäcksler handeln, die mit einem Anbaugerät ausgestattet ist. Dadurch kann der Einsatzbereich der landwirtschaftlichen Arbeitsmaschine an bestehende Ernteanforderungen, wie Erntegutart oder dergleichen, angepasst werden.

Die vorliegende Erfindung wird nachstehend anhand eines in den Zeichnungen dargestellten Ausführungsbeispieles näher erläutert.

Es zeigen:
- Fig. 1: eine schematische Darstellung einer landwirtschaftlichen Arbeitsmaschine und eines Bildverarbeitungssystems;
- Fig. 2: eine schematische Darstellung der landwirtschaftlichen Arbeitsmaschine in einer Ansicht von oben während der Bearbeitung eines Feldes.

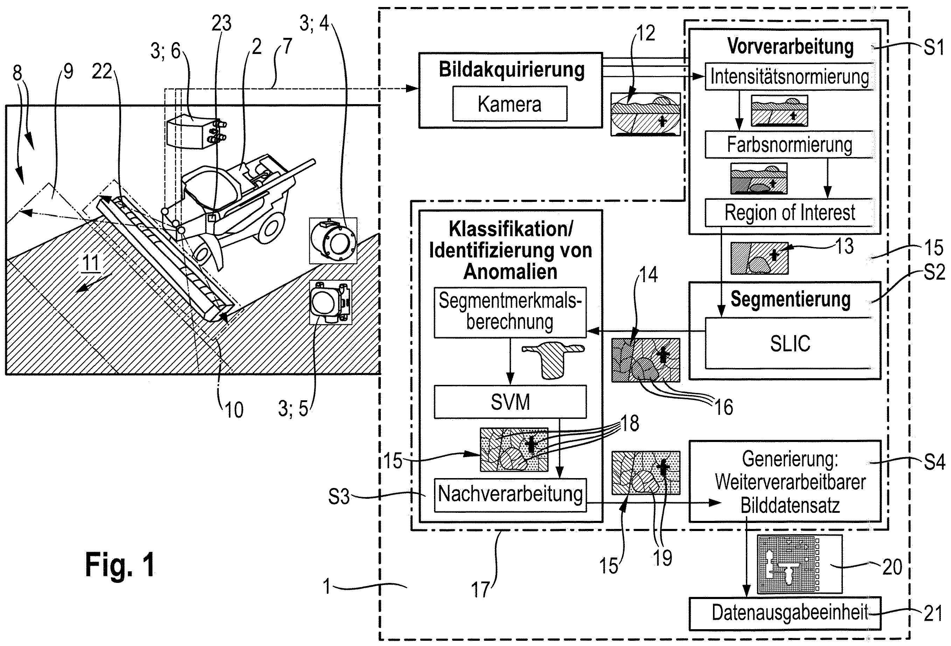

Fig. 1 zeigt schematisch eine an sich bekannte und nicht näher beschriebene landwirtschaftliche Arbeitsmaschine 2 mit einem Bildverarbeitungssystem 1. Die landwirtschaftlichen Arbeitsmaschine 2 umfasst das Bildverarbeitungssystem 1, eine Regel- und Steuervorrichtung 23, eine Datenausgabeeinheit 21 und zumindest ein Bildgenerierungssystem 3. Dabei verarbeitet das Bildverarbeitungssystem 1 eine Auswahl an durch das Bildgenerierungssystem 3 erfassten Umgebungsbildern 7 in einer Bildanalyseeinheit 17. Die Bildanalyseeinheit 17 ist vorzugsweise als eine Recheneinheit ausgebildet. Das Bildgenerierungssystem 3 ist dazu eingerichtet, Umgebungsbilder 7 zu generieren und die verarbeiteten Umgebungsbilder 7 an das Bildverarbeitungssystem 1 zu übergeben. Das Bildverarbeitungssystem 1 ist dazu eingerichtet, in einem ersten Schritt S1 die übergebenen Umgebungsbilder 12, vorzuverarbeiten, insbesondere zu vorverarbeiteten Umgebungsbilder 13. in einem weiteren Schritt S2 die vorverarbeiteten Umgebungsbilder 13 zu segmentieren, so dass segmentierte Umgebungsbildern 14 entstehen, in einem nächsten Schritt S3, entstehende Segmente 16 zu klassifizieren, sodass Hindernisse 19 identifizierbar sind, und in einem folgenden Schritt S4 einen weiterverarbeitbaren Bilddatensatz 20 zu generieren.

Übergebene Umgebungsbilder 12, insbesondere deren Bildeigenschaften, werden im ersten Schritt S1 vorzugsweise normiert. Vorzugsweise wird zudem ein Ausschnitt jedes übergebenen Umgebungsbildes 12 zum Auswerten ausgewählt. Aus den segmentierten Umgebungsbildern 14 werden beim Klassifizieren klassifizierte Umgebungsbilder 15. Vorzugsweise erfolgt die Identifizierung der Hindernisse 19 beim Klassifizieren. Alternativ erfolgt die Identifizierung der Hindernisse 19 an einer anderen Stelle, zum Beispiel durch die Regel- und Steuervorrichtung 23 der landwirtschaftlichen Arbeitsmaschine 2. Die Regel- und Steuervorrichtung 23 ist vorzugsweise dazu eingerichtet, die landwirtschaftliche Arbeitsmaschine 2 anhand des weiterverarbeitbaren Bilddatensatzes 20 zu steuern. Vorzugsweise steuert die Regel- und Steuervorrichtung 23 die landwirtschaftlichen Arbeitsmaschine 2 autonom oder teilautonom.

Die landwirtschaftliche Arbeitsmaschine 2 ist vorzugsweise als selbstfahrender Mähdrescher, selbstfahrender Feldhäcksler oder als Traktoren ausgeführt. An der landwirtschaftliche Arbeitsmaschine 2 können ein oder mehrere Anbaugeräte 22 angeordnet sein. Die landwirtschaftliche Arbeitsmaschine 2 ist hier als Mähdrescher mit einem Schneidwerk als Anbaugerät 22 ausgebildet. An der landwirtschaftlichen Arbeitsmaschine 2 ist zudem das Bildgenerierungssystem 3 angeordnet.

Das Bildgenerierungssystem 3 umfasst zumindest eine optische Sensoreinrichtung 24. Die optische Sensoreinrichtung 24 ist vorzugsweise als mindestens eine Kamera 4 ausgebildet. Die Kamera 4 ist bevorzugt als eine Monochromkamera, eine Infrarotkamera und/oder eine Farbkamera ausgebildet. Alternativ oder zusätzlich umfasst das Bildgenerierungssystem 3 vorzugsweise mindestens eine als Radarsensor 5, Lidar-Sensor oder Laserscanner 6 ausgeführte optische Sensoreinrichtung 24. Es liegt im Rahmen der Erfindung andere optische Sensoren oder eine beliebige Anzahl an optischen Sensoren einzusetzen. Bevorzugt generiert die Kamera 4 Umgebungsbilder 7 von einer Umgebung 8 der landwirtschaftlichen Arbeitsmaschine 2.

Die Umgebungsbilder 7 erfassen eine Umgebung 8 der landwirtschaftlichen Arbeitsmaschine 2. Vorzugsweise umfasst die Umgebung 8 ein Umfeld der landwirtschaftlichen Arbeitsmaschine 2 und/oder Bereiche der landwirtschaftlichen Arbeitsmaschine 2 selbst.

Vorzugsweise ist das Umfeld ein Vorfeld 9 der landwirtschaftlichen Arbeitsmaschine 2. Das Vorfeld 9 erstreckt sich in Fahrtrichtung 11 vor der landwirtschaftlichen Arbeitsmaschine 2 vorzugsweise mindestens über eine Breite entsprechend einer Breite des Anbaugerätes 22. Die Umgebung 8 umfasst vorzugsweise auch Bereiche der landwirtschaftlichen Arbeitsmaschine 2 selbst. Insbesondere umfassen die Bereiche der landwirtschaftlichen Arbeitsmaschine 2 einen Bereich des Anbaugerätes 10.

Bezüglich weiterer Details hinsichtlich der Vorgehensweise zur Identifizierung von Hindernissen 19 mittels des Bildverarbeitungssystem 1 wird auf den Offenbarungsgehalt der DE 10 2016 118 237 A1 Bezug genommen.

Ein durch das Bildverarbeitungssystem 1 identifiziertes Hindernis 19 kann belebt oder unbelebt sein. Ein belebtes Hindernis 19 ist eine Person oder ein Tier, welches in der vom Vorfeld 9 erfassbaren sensorisch Umgebung 8 detektiert wird. Ein unbelebtes Hindernis 19 kann ein Stein, ein Fundament eines Strommastes oder auch ein Arbeitsgerät, ein Anbaugerät, eine andere Arbeitsmaschine sowie ein Transportfahrzeug bzw. Transportwagen sein. Mittels des Bildverarbeitungssystems 1 sind die unterschiedlichen Arten von Hindernissen 19 identifizierbar, ebenso wie ihre jeweilige Lage im Vorfeld 9.

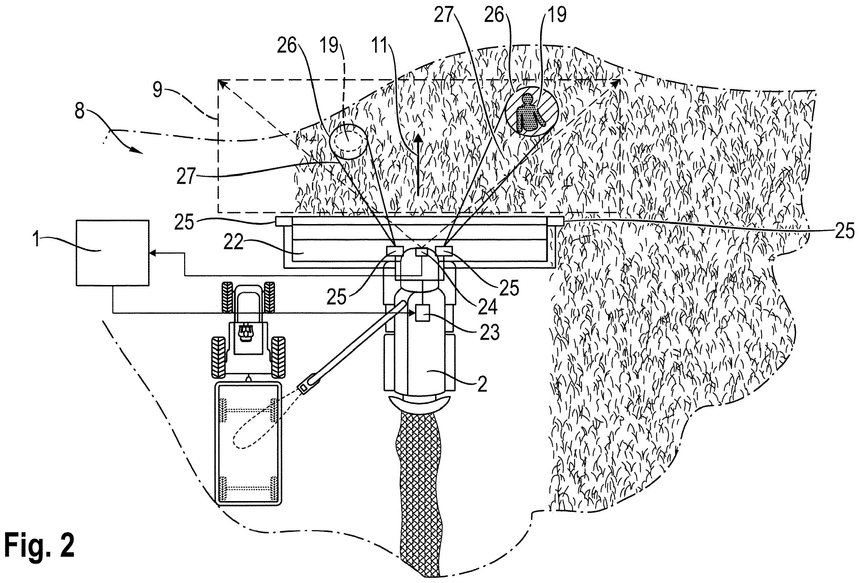

In Fig. 2 ist eine schematische Darstellung der landwirtschaftlichen Arbeitsmaschine 2 in einer Ansicht von oben während der Bearbeitung eines Feldes dargestellt. An der Arbeitsmaschine 2 sind mehrere Lichtquellen 25 angeordnet, welche Teil einer - im Übrigen nicht näher dargestellten - Arbeitsbeleuchtung der Arbeitsmaschine 2 zur Ausleuchtung der Umgebung 8, des Vorfeldes 9 sowie des Bereichs 10 des Anbaugerätes 22 sind. Die Lichtquellen 25 sind im dargestellten Ausführungsbeispiel am Kabinendach einer Fahrerkabine der Arbeitsmaschine 2 angeordnet. Die Ansteuerung der Arbeitsbeleuchtung, unter anderem zu deren Inbetriebnahme, erfolgt durch die Regel- und Steuervorrichtung 23. Lichtquellen der Arbeitsbeleuchtung sind im Allgemeinen an unterschiedlichen Stellen der Arbeitsmaschine 2 angeordnet. Vorzugsweise sind auch die weiteren Lichtquellen 25 der Arbeitsbeleuchtung unter anderem im Bereich der Fahrerkabine der Arbeitsmaschine 2 angeordnet. In Abhängigkeit von der Ausführung der landwirtschaftlichen Arbeitsmaschine 2 sind Teile der Arbeitsbeleuchtung auch an anderen Stellen der Arbeitsmaschine 2 angeordnet.

Die Darstellung in Fig. 2 veranschaulicht das Zusammenwirken von Bildauswertungssystem 1 und der Regel- und Steuervorrichtung 23, welche die Ausrichtung von Lichtstrahlen 27 ansteuert, die von den Lichtquellen 25 emittiert werden. Durch die zumindest eine optische Sensoreinrichtung 24 wird der im Vorfeld 9 der Arbeitsmaschine 2 befindliche Teil der Umgebung 8 vorausschauend erfasst. Das Bildverarbeitungssystem 1 detektiert mittels Bildanalyse das Auftreten eines oder mehrerer Hindernisse 19 in zumindest einer im Vorfeld 9 der Arbeitsmaschine 2 liegenden Hindernisregion 26. Zumindest die Position und die Art des Hindernisses 19 in der durch das Bildverarbeitungssystem 1 bestimmten Hindernisregionen 26 werden an die Regel- und Steuervorrichtung 23 übermittelt. Gegebenenfalls ist auch die Größe des Hindernisses 19 durch das Bildverarbeitungssystem 1 bestimmbar. Das Vorfeld 9 erstreckt sich dabei seitlich über die Breite des Anbaugerätes 22 hinaus, so dass auch sich in den Randbereichen befindende Hindernisse 19, insbesondere mobile Hindernisse wie Personen, Tiere oder andere Arbeitsmaschinen 2, erfasst werden können.

Die Regel- und Steuervorrichtung 23 erzeugt anhand der von dem Bildverarbeitungssystem 1 bereitgestellten Informationen Steuersignale, die eine Ausrichtung zumindest eines der von den Lichtquellen 25 emittierten Lichtstrahlen 27, die der Arbeitsmaschine 2 zugeordnet sind, ansteuert, um den zumindest einen aus sichtbarem Licht bestehenden, gebündelten Lichtstrahl 27 auf die identifizierte Hindernisregion 26 oder das Hindernis 19 auszurichten. Hierzu steuert die Regel- und Steuervorrichtung 23 einen - nicht dargestellten - Aktor der zumindest einen Lichtquelle 25 an, mittels welchem die zumindest eine Lichtquelle 25 um eine vertikale und eine horizontale Achse verschwenkbar ist.

Das Hindernis 19 bzw. die Hindernisregion 26 werden entsprechend der Ausrichtung der zumindest einen Lichtquelle 25 durch den Lichtstrahl 27 gezielt angeleuchtet. Hierdurch wird der Bediener der Arbeitsmaschine 2 unmittelbar und gezielt auf das Hindernis 19 bzw. die Hindernisregion 26 aufmerksam gemacht, was insbesondere beim Arbeiten im Dunkeln oder ungünstigen Lichtverhältnissen von großem Vorteil ist. Während in einem beispielhaften Fall das in Fahrtrichtung 11 gesehen rechts dargestellte Hindernis 19 eine Person ist, welche im Feldbestand steht, ist das links dargestellte Hindernis 19 ein Stein oder ein Rehkitz, der bzw. das durch den Feldbestand verdeckt sein soll, so dass der Bediener der Arbeitsmaschine 2 selbst diesen Stein bzw. das Rehkitz nicht oder nicht rechtzeitig wahrnehmen kann. Durch die Auswertung der Art des Hindernisses 19 durch das Bildverarbeitungssystem 1 lässt sich entweder das Hindernis 19 selbst anstrahlen oder, wie im beispielhaften Fall des Steins als für den Bediener nicht unmittelbar sichtbares Hindernis 19, die Hindernisregion 26. In beiden Fällen wird der Bediener der Arbeitsmaschine 2 effizient auf ein oder mehrere bestehende Hindernisse 19 im Vorfeld der Arbeitsmaschine 2 aufmerksam gemacht.

Dabei ist die Regel- und Steuervorrichtung 23 dazu eingerichtet, die Ausrichtung der zumindest einen Lichtquelle 25 respektive des Lichtstrahls 27 bei einer Annäherung der Arbeitsmaschine 2 an die Hindernisregion 26 nachzuführen. Mit abnehmendem Abstand zu der identifizierten Hindernisregion 26 werden die horizontale und/oder vertikale Ausrichtung der zumindest einen Lichtquelle 25, die auf das Hindernis 19 ausgerichtet ist, angepasst, um das Hindernis 19 oder die Hindernisregion 26 anzustrahlen, bis es passiert wurde.

Weiterhin ist die Regel- und Steuervorrichtung 23 dazu eingerichtet, die zumindest eine Lichtquelle 25 anzusteuern, um in Abhängigkeit von dem identifizierten Hindernis 19 zumindest einen Parameter des zumindest einen von der Lichtquelle 25 emittierten Lichtstrahls 27 zu verändern. Dies ist vorteilhaft, um dem Bediener auf einfache Weise das Unterscheiden von belebten und unbelebten Hindernissen 19 zu ermöglichen. Zudem kann dadurch beim Arbeiten im Dunkeln, währenddessen die Arbeitsbeleuchtung eingeschaltet ist, eine wahrnehmbare Unterscheidung zwischen der auf einen Arbeitsbereich gerichteten Arbeitsbeleuchtung und des zumindest einen von der Lichtquelle 25 emittierten Lichtstrahls 27, der auf ein Hindernis 19 oder eine Hindernisregion 26 ausgerichtet wurde, zu gewährleisten.

Dazu können als änderbare Parameter die Lichtfarbe und/oder Lichtstärke vorgesehen sein. So können in Abhängigkeit von der Art des Hindernisses 19 und/oder ob das Hindernis 19 belebt oder unbelebt ist, verschiedene Farben verwendet werden, mit denen die identifizierte Hindernisregion 26 bzw. das Hindernis 19 angestrahlt wird. Weiterhin denkbar ist eine Variation der Lichtstärke in Abhängigkeit von der Art des Hindernisses 19 und/oder den vorherrschenden Lichtverhältnissen.

Als ein weiterer änderbarer Parameter ist die Frequenz anpassbar, mit der die zumindest eine Lichtquelle 25 einen Lichtstrahl 27 emittiert. So kann beispielsweise die jeweilige identifizierte Hindernisregion 26 intermittierend angestrahlt werden, um den Bediener auf das Auftreten eines Hindernisses 19 aufmerksam zu machen.

Weiterhin ist die Regel- und Steuervorrichtung 23 dazu eingerichtet, die zumindest eine Lichtquelle 25 anzusteuern, um die Lichtausbreitung des von der zumindest einen Lichtquelle 25 emittierten Lichtstrahl 27 anzupassen. Hierdurch kann die, insbesondere divergente, Lichtausbreitung, welche sich im Wesentlichen als ein kegelförmiger Lichtstrahl 27 bzw. Lichtbündel darstellt, deren Querschnitt mit zunehmendem Abstand zur Lichtquelle zunimmt, durch Ansteuerung der zumindest einen Lichtquelle 25 variierbar sein. Mit zunehmender Annäherung an das Hindernis 19 bzw. die Hindernisregion 26 kann eine zunehmende Fokussierung des emittierten Lichtstrahls 27 erfolgen. Dabei ist die Fokussierung des zumindest einen Lichtstrahls 27 bzw. Lichtbündels auf die durch das Bildverarbeitungssystem 1 ermittelte Größe des Hindernisses 19 beschränkt, wenn dies sinnvoll ist.

Zudem ist die Regel- und Steuervorrichtung 23 dazu eingerichtet, die Ausrichtung von zumindest zwei Lichtquellen 25 anzusteuern, um die von den zumindest zwei Lichtquellen 25 emittierten Lichtstrahlen 27 auf eine identifizierte Hindernisregion 26 oder ein Hindernis 19 zu fokussieren. Dies ist insbesondere dann sinnvoll, wenn das identifizierte Hindernis 19 belebt ist, d.h. es sich um eine Person oder ein Tier handelt.

Eine Anordnung weiterer Lichtquellen 25 an dem Anbaugerät 22 ist ebenfalls denkbar. Insbesondere eine distale Anordnung an den äußeren Enden des Anbaugerätes 22 bietet zusätzlichen Nutzen, indem seitliche Bereiche im Vorfeld 9, die sich im Wesentlichen senkrecht zur Fahrtrichtung 11 erstrecken, durch eine entsprechende Ansteuerung der Lichtquellen durch Regel- und Steuervorrichtung 23 auf identifizierte Hindernisse 19 oder Hindernisregionen 27 ausgerichtet werden können.

Ebenso kann die zumindest eine optische Sensoreinrichtung 24 an der Arbeitsmaschine 2 und/oder an dem von der Arbeitsmaschine 2 frontseitig aufgenommenen Anbaugerät 22 angeordnet sein. So kann eine Anordnung beispielsweise von Laserscannern 4 oder Kameras 6 an dem Anbaugerät 22 vorgesehen sein, mittels derer Hindernisse 19 identifiziert werden können.

### Bezugszeichenliste

- 1: Bildverarbeitungssystem
- 2: Arbeitsmaschine
- 3: Bildgenerierungssystem
- 4: Kamera
- 5: Radarsensor
- 6: Laserscanner
- 7: Bild
- 8: Umgebung
- 9: Vorfeld
- 10: Bereich eines Anbaugerätes
- 11: Fahrtrichtung
- 12: Übergebene Umgebungsbilder
- 13: Vorverarbeitete Umgebungsbilder
- 14: Segmentierte Umgebungsbilder
- 15: Klassifizierte Umgebungsbilder
- 16: Segment
- 17: Bildanalyseeinheit
- 18: Klasse
- 19: Hindernis
- 20: Bilddatensatz
- 21: Datenausgabeeinheit
- 22: Anbaugerät
- 23: Regel- und Steuervorrichtung
- 24: Optische Sensoreinrichtung
- 25: Lichtquelle
- 26: Hindernisregion
- 27: Lichtstrahl

## Patentansprüche

1. Landwirtschaftliche Arbeitsmaschine (2), umfassend zumindest eine optische Sensoreinrichtung (3, 24), ein Bildverarbeitungssystem (1) sowie eine Regel- und Steuervorrichtung (23), wobei die zumindest eine optische Sensoreinrichtung (2, 24) eingerichtet ist eine Umgebung (8) im Vorfeld (9) der Arbeitsmaschine (2) vorausschauend zu erfassen, wobei das Bildverarbeitungssystem (1) eingerichtet ist das Auftreten eines oder mehrerer Hindernisse (19) in zumindest einer in der Umgebung (8) im Vorfeld (9) der Arbeitsmaschine (2) liegenden Hindernisregion (26) mittels Bildanalyse zu detektieren, **dadurch gekennzeichnet,**
- **dass** die Regel- und Steuervorrichtung (23) zur Ansteuerung einer mehrere Lichtquellen umfassenden Arbeitsbeleuchtung eingerichtet ist, und
- **dass** die Regel- und Steuervorrichtung (23) eingerichtet ist Steuersignale zu erzeugen, die eine Ausrichtung zumindest einer der Arbeitsmaschine (2) zugeordneten Lichtquelle (25), die zumindest einen aus sichtbarem Licht bestehenden, gebündelten Lichtstrahl (27) erzeugt, ansteuern, um den zumindest einen Lichtstrahl (27) auf die identifizierte Hindernisregion (26) auszurichten.

2. Landwirtschaftliche Arbeitsmaschine (2) nach Anspruch 1, **dadurch gekennzeichnet, dass** die Regel- und Steuervorrichtung (23) dazu eingerichtet ist, die Ausrichtung des emittierten Lichtstrahls (27) der zumindest einen Lichtquelle (25) bei einer Annäherung der Arbeitsmaschine (2) an die Hindernisregion (26) nachzuführen.

3. Landwirtschaftliche Arbeitsmaschine (2) nach Anspruch 1 oder 2, **dadurch gekennzeichnet, dass** das Bildverarbeitungssystem (1) dazu eingerichtet ist, zwischen unterschiedlichen Arten von Hindernissen (19) zu unterscheiden.

4. Landwirtschaftliche Arbeitsmaschine (2) nach Anspruch 1 bis 3, **dadurch gekennzeichnet, dass** das Bildverarbeitungssystem (1) dazu eingerichtet ist, zwischen belebten und unbelebten Hindernissen (19) zu unterscheiden.

5. Landwirtschaftliche Arbeitsmaschine (2) nach Anspruch 3 oder 4, **dadurch gekennzeichnet, dass** die Regel- und Steuervorrichtung (23) dazu eingerichtet ist, die zumindest eine Lichtquelle (25) anzusteuern, um in Abhängigkeit von dem identifizierten Hindernis (19) zumindest einen Parameter des zumindest einen emittierten Lichtstrahls (27) zu verändern.

6. Landwirtschaftliche Arbeitsmaschine (2) nach Anspruch 5, **dadurch gekennzeichnet, dass** als änderbare Parameter die Lichtfarbe und/oder Lichtstärke vorgesehen sind.

7. Landwirtschaftliche Arbeitsmaschine (2) nach Anspruch 5 oder 6, **dadurch gekennzeichnet, dass** als änderbarer Parameter die Frequenz anpassbar ist, mit der die zumindest eine Lichtquelle (25) den Lichtstrahl (27) emittiert.

8. Landwirtschaftliche Arbeitsmaschine (2) nach einem der Ansprüche 1 bis 7, **dadurch gekennzeichnet, dass** die Regel- und Steuervorrichtung (23) dazu eingerichtet ist, die zumindest eine Lichtquelle (25) anzusteuern, um die Lichtausbreitung des von der zumindest einen Lichtquelle (25) emittierten Lichtstrahl (27) anzupassen.

9. Landwirtschaftliche Arbeitsmaschine (2) nach einem der vorangehenden Ansprüche, **dadurch gekennzeichnet, dass** die zumindest eine optische Sensoreinrichtung (3, 24) dazu eingerichtet ist, die Umgebung (8) im Vorfeld (9) mit Licht im nicht sichtbaren Bereich zu erfassen.

10. Landwirtschaftliche Arbeitsmaschine (2) nach Anspruch 9, **dadurch gekennzeichnet, dass** die zumindest eine optische Sensoreinrichtung (3, 24) als Laserscanner (6), Lidar-Sensor, Radarsensor (5) und/oder Kamera (4) ausgeführt ist.

11. Landwirtschaftliche Arbeitsmaschine (2) nach einem der vorangehenden Ansprüche, **dadurch gekennzeichnet, dass** die zumindest eine Lichtquelle (25) an der Arbeitsmaschine (2) und/oder an einem von der Arbeitsmaschine (2) frontseitig aufgenommenen Anbaugerät (22) angeordnet ist.

12. Landwirtschaftliche Arbeitsmaschine (2) nach einem der vorangehenden Ansprüche, **dadurch gekennzeichnet, dass** die zumindest eine optische Sensoreinrichtung (3, 24) an der Arbeitsmaschine (2) und/oder an einem von der Arbeitsmaschine (2) frontseitig aufgenommenen Anbaugerät (22) angeordnet ist.

13. Landwirtschaftliche Arbeitsmaschine (2) nach einem der vorangehenden Ansprüche, **dadurch gekennzeichnet, dass** die Regel- und Steuervorrichtung (23) dazu eingerichtet ist, die Ausrichtung von zumindest zwei Lichtquellen (25) anzusteuern, um diese auf eine identifizierte Hindernisregion (26) zu fokussieren.

14. Landwirtschaftliche Arbeitsmaschine (2) nach einem der vorangehenden Ansprüche, **dadurch gekennzeichnet, dass** die landwirtschaftliche Arbeitsmaschine (2) als eine selbstfahrende Erntemaschine oder als ein Traktor ausgeführt ist.

## Claims

1. An agricultural working machine (2) comprising at least one optical sensor means (3, 24), an image processing system (1), as well as a regulation and control device (23), wherein the at least one optical sensor means (2, 24) is configured to measure in anticipation an environment (8) in the forefield (9) of the working machine (2), wherein the image processing system (1) is configured to detect the appearance of one or more obstacles (19) in at least one obstacle region (26) located in the environment (8) in the forefield (9) of the working machine (2) by means of image analysis,
**characterized in that**
- the regulation and control device (23) is configured to control working illumination comprising a plurality of light sources, and
- the regulation and control device (23) is configured to produce control signals which control an orientation of at least one of the light sources (25) associated with the working machine (2) which produces at least one bundled light beam (27) consisting of visible light in order to orientate the at least one light beam (27) onto the identified obstacle region (26).

2. The agricultural working machine (2) according to claim 1, **characterized in that** the regulation and control device (23) is configured to guide the orientation of the light beam (27) emitted from the at least one light source (25) as the working machine (2) approaches the obstacle region (26).

3. The agricultural working machine (2) according to claim 1 or claim 2, **characterized in that** the image processing system (1) is configured to differentiate between different types of obstacles (19).

4. The agricultural working machine (2) according to claims 1 to 3, **characterized in that** the image processing system (1) is configured to differentiate between animate obstacles and inanimate obstacles (19).

5. The agricultural working machine (2) according to claim 3 or claim 4, **characterized in that** the regulation and control device (23) is configured to control the at least one light source (25) in order to vary at least one parameter of the at least one emitted light beam (27) as a function of the identified obstacle (19).

6. The agricultural working machine (2) according to claim 5, **characterized in that** the variable parameter which is provided is the light colour and/or the light intensity.

7. The agricultural working machine (2) according to claim 5 or claim 6, **characterized in that** as the variable parameter, the frequency at which the light source (25) emits the light beam (27) can be adjusted.

8. The agricultural working machine (2) according to one of claims 1 to 7, **characterized in that** the regulation and control device (23) is configured to control the at least one light source (25) in order to adjust the light spreading of the light beam (27) emitted from the at least one light source (25).

9. The agricultural working machine (2) according to one of the preceding claims, **characterized in that** the at least one optical sensor means (3, 24) is configured to measure the environment (8) in the foreground (9) with light in the non-visible range.

10. The agricultural working machine (2) according to claim 9, **characterized in that** the at least one optical sensor means (3, 24) is constructed as a laser scanner (6), lidar sensor, radar sensor (5) and/or camera (4).

11. The agricultural working machine (2) according to one of the preceding claims, **characterized in that** the at least one light source (25) is disposed on the working machine (2) and/or on an attachment (22) attached to the front of the working machine (2).

12. The agricultural working machine (2) according to one of the preceding claims, **characterized in that** the at least one optical sensor means (3, 24) is disposed on the working machine (2) and/or on an attachment (22) attached to the front of the working machine (2).

13. The agricultural working machine (2) according to one of the preceding claims, **characterized in that** the regulation and control device (23) is configured to control the orientation of at least two light sources (25) in order to focus them onto an identified obstacle region (26).

14. The agricultural working machine (2) according to one of the preceding claims, **characterized in that** the agricultural working machine (2) is constructed as a self-propelled harvesting machine or as a tractor.

## Revendications

1. Machine de travail agricole (2), incluant au moins un équipement de capteur optique (3, 24), un système de traitement d'image (1) ainsi qu'un dispositif de régulation et de commande (23), le au moins un équipement de capteur optique (2, 24) étant agencé pour palper par anticipation un environnement (8) dans la zone d'approche (9) de la machine de travail (2), le système de traitement d'image (1) étant agencé pour détecter au moyen d'une analyse d'images l'apparition d'un ou de plusieurs obstacles (19) dans au moins une région d'obstacle (26) située dans l'environnement (8) dans la zone d'approche (9) de la machine de travail (2), **caractérisée en ce que** le dispositif de régulation et de commande (23) est agencé pour agir sur un éclairage de travail incluant plusieurs sources lumineuses, et **en ce que** le dispositif de régulation et de commande (23) est agencé pour générer des signaux de commande qui agissent sur une orientation au moins d'une source lumineuse (25) qui est associée à la machine de travail (2) et qui génère au moins un rayon lumineux en faisceau (27) constitué de lumière visible, afin d'orienter le au moins un rayon lumineux (27) vers la région d'obstacle identifiée (26).

2. Machine de travail agricole (2) selon la revendication 1, **caractérisée en ce que** le dispositif de régulation et de commande (23) est agencé pour ajuster l'orientation du rayon lumineux émis (27) de la au moins une source lumineuse (25) lorsque la machine de travail (2) s'approche de la région d'obstacle (26).

3. Machine de travail agricole (2) selon la revendication 1 ou 2, **caractérisée en ce que** le système de traitement d'image (1) est agencé pour différencier différents types d'obstacles (19).

4. Machine de travail agricole (2) selon la revendication 1 à 3, **caractérisée en ce que** le système de traitement d'image (1) est agencé pour différencier des obstacles animés et inanimés (19) .

5. Machine de travail agricole (2) selon la revendication 3 ou 4, **caractérisée en ce que** le dispositif de régulation et de commande (23) est agencé pour agir sur au moins une source lumineuse (25) afin de modifier, en fonction de l'obstacle identifié (19), au moins un paramètre du au moins un rayon lumineux émis (27).

6. Machine de travail agricole (2) selon la revendication 5, **caractérisée en ce que** comme paramètres modifiables sont prévues la couleur de lumière et l'intensité de lumière.

7. Machine de travail agricole (2) selon la revendication 5 ou 6, **caractérisée en ce que**, comme paramètre modifiable, la fréquence avec laquelle la au moins une source lumineuse (25) émet le rayon lumineux (27) est adaptable.

8. Machine de travail agricole (2) selon une des revendications 1 à 7, **caractérisée en ce que** le dispositif de régulation et de commande (23) est agencé pour agir sur la au moins une source lumineuse (25) afin d'adapter la propagation de lumière du rayon lumineux (27) émis par la au moins une source lumineuse (25).

9. Machine de travail agricole (2) selon une des revendications précédentes, **caractérisée en ce que** le au moins un équipement de capteur optique (3, 24) est agencé pour palper l'environnement (8) dans la zone d'approche (9) avec de la lumière dans la plage non visible.

10. Machine de travail agricole (2) selon la revendication 9, **caractérisée en ce que** le au moins un équipement de capteur optique (3, 24) est conformé en scanner laser (6), en capteur lidar, en capteur radar (5) et/ou en caméra (4).

11. Machine de travail agricole (2) selon une des revendications précédentes, **caractérisée en ce que** la au moins une source lumineuse (25) est disposée sur la machine de travail (2) et/ou sur un outil rapporté (22) reçu frontalement par la machine de travail (2).

12. Machine de travail agricole (2) selon une des revendications précédentes, **caractérisée en ce que** le au moins un équipement de capteur optique (3, 24) est disposé sur la machine de travail (2) et/ou sur un outil rapporté (22) reçu frontalement par la machine de travail (2).

13. Machine de travail agricole (2) selon une des revendications précédentes, **caractérisée en ce que** le dispositif de régulation et de commande (23) est agencé pour agir sur l'orientation d'au moins deux sources lumineuses (25) afin de les focaliser sur une région d'obstacle identifiée (26) .

14. Machine de travail agricole (2) selon une des revendications précédentes, **caractérisée en ce que** la machine de travail agricole (2) est conformée en machine de récolte automotrice ou en tracteur.
